# EUROPÄISCHE PATENTSCHRIFT

(11) **EP 0 511 996 B1**
(45) Veröffentlichungstag und Bekanntmachung des Hinweises auf die Patenterteilung: **27.04.1994**
(21) Anmeldenummer: 91902655.9
(22) Anmeldetag: 19.01.1991
(51) Int. Cl.: G07D 7/00, G06K 13/06

(54) **PRÜFGERÄT FÜR BANKNOTEN**
BANK NOTE TESTER
DISPOSITIF DE CONTROLE POUR BILLETS DE BANQUE

(30) Priorität: 22.01.1990 DE 4001716
(43) Veröffentlichungstag der Anmeldung: 11.11.1992
(73) Patentinhaber: NSM AKTIENGESELLSCHAFT, 55411 Bingen (DE)
(72) Erfinder: MENKE, Wilhelm, W-6507 Ingelheim (DE); MULDER, Arjen, J., W-6531 Manubach (DE)
(74) Vertreter: Becker, Bernd, Dipl.-Ing.
(86) Internationale Anmeldenummer: DE9100055
(87) Internationale Veröffentlichungsnummer: WO9110975

(56) Entgegenhaltungen:
- EP-A- 0 312 009
- DE-A- 2 747 795
- US-A- 4 301 361

## Beschreibung

Die Erfindung bezieht sich auf ein Prüfgerät für Banknoten oder dergleichen blattförmige Zahlungmittel für selbstkassierende Automaten mit einem mit einer Transporteinrichtung und mit Abtasteinrichtungen für das Erkennen und die Echtheitsprüfung der Banknote versehenen Prüfkanal, dem ein Eingabekanal mit verstellbarer Breite vorgelagert ist.

Aus der DE 27 47 795 A1 ist bereits ein Dokumenten-Lesegerät bekannt, bei dem die Positionierung des Dokumentes beim Durchlauf durch den Transportkanal relativ zu den Transportelementen als eine Funktion der Breite des Dokumentes eingestellt wird. Mit anderen Worten sind die durch Rollen gekennzeichneten Transportmittel feststehend, jedoch wird die Positionierung des Dokumentes beim Transport durch die Einstellmittel bestimmt, wodurch eine solche Position relativ zu den Transportmitteln als eine Funktion der Breite des Dokumentes eingestellt wird. Der Transportkanal des Dokumenten-Lesegerätes, durch welchen die Dokumente während des Abtastprozesses geführt werden, ist mit einer verstellbaren Seitenwand für die Bestimmung entweder bestimmter Breiten des Transportkanals oder mit einem Breitenbereich für den Betrieb mit Dokumenten jeder beliebigen Breite innerhalb dieses Bereiches ausgerüstet. Dem Abtastteil des Dokumenten-Lesegerätes kann ein Eingabeteil vorgeschaltet sein, wobei Einstellelemente für die Kanalbreite in dem Eingabeteil und dem Abtastteil vorgesehen sind. Hierbei sprechen die Einstellelemente für die Breite des Transportkanals im Abtastteil in der Einstellbreite in Abhängigkeit von der Position der Breiten-Einstellelemente des Eingabeteils an. Damit sind also gesonderte Breiten-Einstellelemente für den Kanal des Eingabeteils und den Kanal des Abtastteils erforderlich, was fertigungstechnisch äußerst aufwendig ist. Da die Breiteneinstellung der Kanäle jeweils durch Veränderung der Lage einer beweglichen Seitenwand zu einer feststehenden Seitenwand erfolgt, verändert sich dementsprechend die Position der Mittenlängsachse der Kanäle. Eine solche Verschiebung der Mittenlängsachse des Kanals des Abtastteils in Abhängigkeit von der Breite des zu prüfenden Dokumentes ist insofern nachteilig, als bei der Prüfung von Banknoten, die in der Regel unabhängig von ihrer Breite gleiche Identifizierungsmerkmale im gleichen Abstand von der Mittenlängsachse aufweisen, für das gleiche Identifizierungsmerkmal auf mehreren Banknoten unterschiedlicher Breite die entsprechende Anzahl an Abtasteinrichtungen eingesetzt werden muß.

Der Erfindung liegt die Aufgabe zugrunde, ein Prüfgerät der eingangs genannten Art zu schaffen, das insgesamt einfach und kompakt aufgebaut ist und eine exakte Zuführung von Banknoten unterschiedlicher Breite in mittig ausgerichteter Längsrichtung zu und in einen Prüfkanal ermöglicht.

Diese Aufgabe wird erfindungsgemäß dadurch gelöst, daß
- der Eingabekanal aus zwei in seiner Mittenlängsachse getrennten Kanalhälften, die synchron parallel gegen Federkraft verstellbar sind, besteht,
- die Kanalhälften in ihrer Anlageposition die minimale und in ihrer getrennten Endposition die maximale Kanalbreite bestimmen,
- die Einführung einer jeden Banknote in den Eingabekanal bei verriegelter maximaler Kanalbreite bis zu einem im Anfangsbereich des Prüfkanals angeordneten Durchlauferkenner erfolgt, und
- der Durchlauferkenner eine Aufhebung der Verriegelung der Kanalhälften bewirkt, wodurch sich die Seitenwände der Kanalhälften aufgrund der Federkraft an die Banknote anlegen und diese mittenzentrisch zu dem Prüfkanal ausrichten.

Der mit der Erfindung erzielte wesentliche Vorteil besteht in der genau fluchtenden Ausrichtung der Mittenlängsachse von Banknoten unterschiedlicher Breite, die in Längsrichtung in den Eingabekanal eingegeben werden, zu der Mittenlängsachse des Prüfkanals. Demzufolge erübrigt sich eine Breiteneinstellung des Prüfkanals, woraus einerseits eine relativ einfache Bauweise resultiert und andererseits bestimmte Meßstellen der Abtasteinrichtungen für Banknoten unterschiedlicher Breite gleichzeitig verwendbar sind. Durch die synchrone Parallelverstellung der Kanalhälften des Eingabekanals zwischen der minimalen und der maximalen Kanalbreite kann jede Banknote mit beliebiger, in den vorgenannten Kanalbreitenbereich fallender Breite längsmittig in Übereinstimmung mit der Mitte des Prüfkanals ausgerichtet werden.

Um eine automatische Einstellung des Prüfgerätes für das Prüfen von Banknoten einer gegebenen Breite zu erzielen, ist nach einer vorteilhaften Ausgestaltung der Erfindung mit der synchronen Verstellung der Kanalhälften eine Meßeinrichtung für die Erfassung der Banknoten-Breite gekoppelt, über die ein entsprechendes, von der Banknoten-Breite abhängiges Banknoten-Prüfprogramm der Abtasteinrichtungen aktivierbar ist.

Zur Realisierung einer konstruktiv einfachen Betätigung der Kanalhälften des Eingabekanals stehen diese nach einer vorteilhaften Weiterbildung des Gegenstandes der Erfindung mit einem Hebel-Gestänge in Wirkverbindung, das über eine mittels eines Schneckengetriebes mit einem Antriebsmotor gekoppelte Steuerscheibe für die funktionsgerechte Verstellung der Kanalhälften beaufschlagbar ist.

Bei einer weiteren vorteilhaften Ausgestaltung der Erfindung sind die im Querschnitt U-förmig ausgebildeten Kanalhälften über auf ihrer Oberseite angeformte Lager auf drei im gleichen Abstand zueinanderliegenden Querachsen, die in gegenüberliegenden Tragwänden gehaltert sind, gleitbeweglich geführt. Dadurch ergibt sich eine exakte Parallelführung der Kanalhälften.

Zweckmäßigerweise trägt die mittlere Querachse mittig einen Lagerzapfen für die Aufnahme eines dreiarmigen Winkelhebels des Hebel-Gestänges, dessen fluchtende Hebelarme an den gegenüberliegenden Längsseiten der Kanalhälften angelenkt sind und dessen rechtwinklig abgewinkelter Hebelarm endseitig einen Stift aufnimmt, der aufgrund der Wirkung einer mit diesem Hebelarm und der hinteren Querachse verbundenen Zugfeder kraftschlüssig an den freien Enden einer Stellstange des Hebel-Gestänges anliegt. So ergibt sich mit einfachen Mitteln eine synchrone Parallelverstellung der Kanalhälften zueinander. Zweckmäßigerweise ist hierbei die Stellstange in ihrem freien Endbereich in einer in ein Langloch eingreifenden Zapfenführung gehaltert und an ihrem anderen Ende an einem zweiseitisen Hebelangelenkt, der um einen in der Mittenlängsachse des Prüfkanals liegenden Lagerzapfen verschwenkbar ist und mit seinem als Nocken ausgebildeten freien Ende an der Steuerscheibe anliegt. Weiterhin sind hierbei bevorzugt die Steuerscheibe und das Schneckenrad des Schneckengetriebes drehfest mit-einander verbunden und auf einer gemeinsamen Achse drehbeweglich gelagert.

Bei einer vorteilhaften Ausgestaltung der erfindungsgemäßen Lösung weist die Transporteinrichtung für die Banknote einen drehrichtungsumschaltbaren Antriebsmotor für zwei in bestimmtem Abstand zueinander parallel verlaufende, endlose Zahnriemen auf, die auf jeweils paarweise innerhalb der Bahnbreite der Banknote im Bereich des Prüfkanals angeordnete Rollen aufgelegt sind, denen jeweils in der Bewegungsbahn der Banknote eine federbelastete Andrückrolle oder Kufe gegenüberliegt, wobei die vorderen, dem Eingabekanal unmittelbar zugewandten Andrückrollen oder Kufen von den Zahnriemen zwangsgesteuert entgegen der Federkraft abhebbar sind. Dadurch ist es möglich, eine Banknote bei abgehobenen vorderen Andrückrollen oder Kufen bis in den Eingangsbereich des Prüfkanals von Hand zu schieben und dann nach Absenkung der vorderen Andrückrollen Oder Kufen den Zwangstransport der Banknote durch den Prüfkanal mittels der Transporteinrichtung beginnen zu lassen.

Um eine konstruktiv einfache Ausführung der Verstellung der vorderen Andrückrollen zu erhalten, stehen nach einer vorteilhaften Weiterbildung der Erfindung die Achsen der vorderen Andrückrollen bzw. seitlich an den Kufen angeformte Stifte zur funktionsgerechten Steuerung ihrer Höhenverstellung über eine federbelastete Hebel-Anordnung mit einer Nokkenscheibe in Wirkverbindung, die drehfest an der die Kanalhälften beaufschlagenden Steuerscheibe befestigt und auf der Achse des Schneckenrades des Schneckengetriebes drehbeweglich gelagert ist. Zweckmäßigerweise umfaßt die Hebel-Anordnung zwei auf den gegenüberliegenden Seitenwänden des Prüfgerätes längsverschiebliche Flachhebel, die jeweils mit einer der Achse der entsprechenden vorderen Andrückrolle bzw. mit einem der Stifte der vorderen Kufen zugeordneten Steuerkurve versehen sind und die an dem der Steuerkurve gegenüberliegenden Ende jeweils eine Einbuchtung aufweisen, in die die diametralen Arme eines dreiarmigen, durch die Nockenscheibe beaufschlagten Schwenkhebels eingreifen. Weiterhin ist dabei bevorzugt vorgesehen, daß der dreiarmige Schwenkhebel auf dem in der Mittenlängsachse des Prüfkanals liegenden Lagerzapfen gelagert ist und mit seinem von dem diametralen Armen abgewinkelten Nockenarm aufgrund der Wirkung einer an dem entsprechenden Arm angreifenden Zugfeder an der Nockenscheibe anliegt.

Zur Überwachung der Verstellung der Kanalhälften des Eingabekanals und der vorderen Andrückrollen bzw. Kufen bei einer weiteren vorteilhaften Ausgestaltung der erfindungsgemäßen Lösung auf dem den dreiarmigen Schwenkhebel der Hebel-Anordnung sowie den zweiseitigen Hebel des Hebel-Gestänges aufnehmenden Lagerzapfen ein federbelasteter zweiarmiger Hebel gelagert, der einerseits mit einer mit dem Antriebsmotor gekoppelten Kurvenscheibe und andererseits mit den Gabeln zweier Positionierimpulse erzeugender Gabelkoppler zusammenwirkt. Hierbei ist zweckmäßigerweise das der Kurvenscheibe zugewandte Ende des zweiarmigen Hebels als Nocke ausgebildet, die aufgrund der Wirkung einer sich zwischen einer Abwinklung des zweiarmigen Hebels und einem an der Oberwand des Prüfgerätes angeordneten Zapfen erstreckenden Zugfeder an der Kurvenscheibe anliegt, wobei die Kurvenscheibe drehfest an dem Schneckenrad des Schneckengetriebes befestigt und ebenfalls auf der Achse des Schneckenrades drehbeweglich gelagert ist.

Zur einfachen Erkennung der Öffnungsbreite der Kanalhälften des Eingabekanals bei einer eingeschobenen Banknote bestimmter Breite umfaßt bei einer vorteilhaften Weiterbildung der Erfindung die Meßeinrichtung für die Erfassung der Banknoten-Breite eine Lochkranz-Scheibe, deren von der Scheibe abgewinkelter Lochkranz in den Gabeln zweier unter 90° versetzt zueinander angeordneter, Positionierimpulse erzeugender Gabelkoppler läuft, wobei die Lochkranz-Scheibe ein Zahnrad trägt, das mit einem mit dem Winkelhebel für die Verstellung der Kanalhälften verbundenen Zahnkranzsegment kämmt.

Der der Erfindung zugrundeliegende Gedanke wird in der nachfolgenden Beschreibung anhand eines Ausführungsbeispieles, das in der Zeichnung dargestellt ist, näher erläutert. Es zeigt:

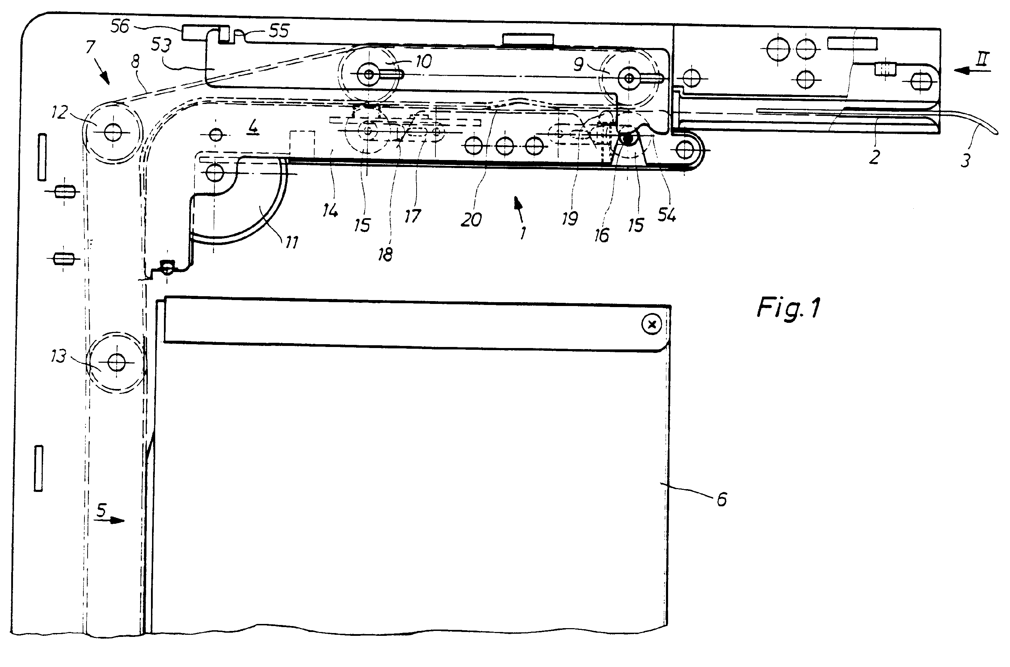

- Fig. 1: eine Seitenansicht eines Banknoten-Prüfgerätes mit einem vorgeschalteten Eingabekanal und einer nachgeschalteten Stapeleinrichtung für die Speicherung der Banknoten,

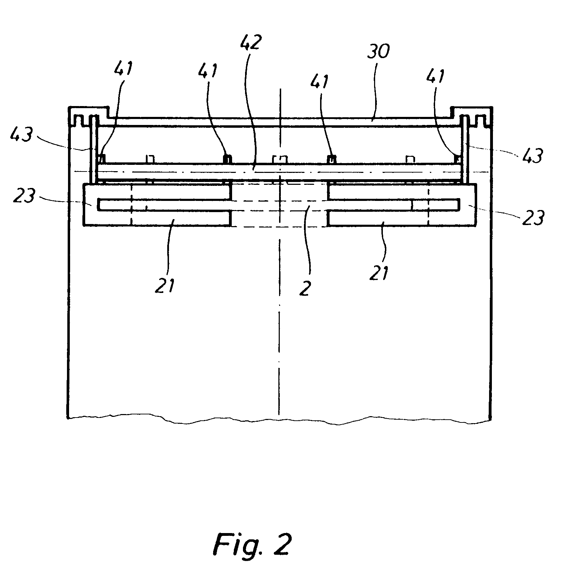

- Fig. 2: eine Ansicht auf die Darstellung nach Fig. 1 in Richtung des Pfeiles II,
- Fig. 3: eine Unteransicht des Prüfgerätes mit zugehörigem Eingabekanal nach Fig. 1 in vereinfachter Darstellung,
- Fig. 4: die Darstellung nach Fig. 3, jedoch ohne den zweiarmigen Hebel und ohne die diesem Hebel zugeordnete Kurvenscheibe, und
- Fig. 5: die Darstellung nach Fig. 3, jedoch ohne den zweiarmigen Hebel mit zugeordneter Kurvenscheibe und ohne den zweiseitigen Hebel mit zugeordneter Steuerscheibe.

Dem in horizontaler Lage angeordneten Banknoten-Prüfgerät 1 ist ein Eingabekanal 2 für eine Banknote 3 vorgeschaltet. An den Ausgang des Prüfgerätes 1 schließt sich unmittelbar eine 90°-Übergabeführung 4 für eine aus dem Prüfgerät 1 austretende Banknote 3 an, die die Banknote 3 zu einer in vertikaler Lage angebrachten Stapeleinrichtung 5 leitet. Der Stapeleinrichtung 5 gegenüber liegt die Ladeöffnung eines in seinem Innern mit einer abgefederten Platte versehenen Banknoten-Stapelbehälters 6. Die Beförderung der Banknote 3 im Längsformat durch das Prüfgerät 1 über die 90°-Übergabeführung 4 in die stapelfähige Position zwischen der Stapeleinrichtung 5 und der Ladeöffnung des Stapelbehälters 6 erfolgt durch eine Transporteinrichtung 7, die zwei im bestimmten Abstand zueinander parallel verlaufende endlose Zahnriemen 8 aufweist. Die Zahnriemen 8 sind auf paarweise angeordnete Umkehrrollen 9 im Eingangsbereich des Prüfgerätes 1, Zwischenrollen 10 im Ausgangsbereich des Prüfgerätes 1, Umlenkrollen 11 und 12 der Übergabeführung 4, Stützrollen 13 im oberen Bereich der Stapeleinrichtung 5 und nicht dargestellte Antriebsrollen, die über ein Schneckengetriebe mit einem drehrichtungsumschaltbaren Antriebsmotor gekoppelt sind, aufgelegt, wobei sämtliche Rollen auf in Seitenwänden 14 aufgenommenen Achsen gelagert sind. Des weiteren sind an den Seitenwänden 14 vier federbelastete Andrückrollen 15 befestigt, die an den Zahnriemen 8 im Bereich der paarweise angeordneten Umkehrrollen 9 und Zwischenrollen 10 anliegen. Das Erfassen und die Mitnahme der Banknote 3 erfolgt also durch die Andrückrollen 15 im Zusammenwirken mit dem Zahnriemen 8. Die Achse 16 einer jeden Andrückrolle 15 ist in einer schwenkbeweglich an der zugehörigen Seitenwand 14 befestigten Halterung 17 aufgenommen, wobei die jeweils hintereinanderliegenden Halterungen 17 durch eine gemeinsame Drahtfeder 18 in Richtung auf die Zahnriemen 8 beaufschlagt sind.

Zur Feststellung der Präsenz einer Banknote 3 im Prüfgerät 1 befindet sich hinter den vorderen Andrückrollen 15 in der Bewegungsbahn der Banknote 3 ein mit einer Schalteinrichtung gekoppelter Durchlauferkenner 19. Des weiteren ist das Prüfgerät 1 in an sich bekannter Weise mit dem Prüfkanal 20 zugeordneten, im einzelnen jedoch nicht dargestellten Abstasteinrichtungen für die Echtheitsprüfung einer Banknote 3 bestückt.

Der Eingabekanal 2 setzt sich aus zwei im Querschnitt U-förmigen Kanalhälften 21 zusammen, die zu der Mittenlängsachse 22 des Eingabekanals 2 synchron parallel hin- und herverschiebbar sind. In der durch Federkraft bewirkten Anlageposition der Kanalhälften 21 legen diese die minimale Kanalbreite des Eingabekanals fest, während die getrennte, verriegelbare Endposition entgegen der Federkraft auseinander gefahrenen Kanalhälften 21 die maximale Kanalbreite des Eingabekanals 2 bestimmt. Bei verriegelter maximaler Kanalbreite des Eingabekanals 2 wird eine Banknote 3 von Hand durch den Eingabekanal 2 bis zu dem Durchlauferkenner 19 geschoben, der daraufhin ein Signal an die Schalteinrichtung abgibt, die ihrerseits wiederum eine Aufhebung der Verriegelung der Kanalhälften 21 auslöst, so daß sich aufgrund der Federkraft die Innenseiten der Seitenwände 23 der Kanalhälften 21 an die Längsseiten der Banknote anlegen und damit diese genau mit ihrer Mittenlängsachse auf die Mittenlängsachse 24 des Prüfkanals 20 ausrichten.

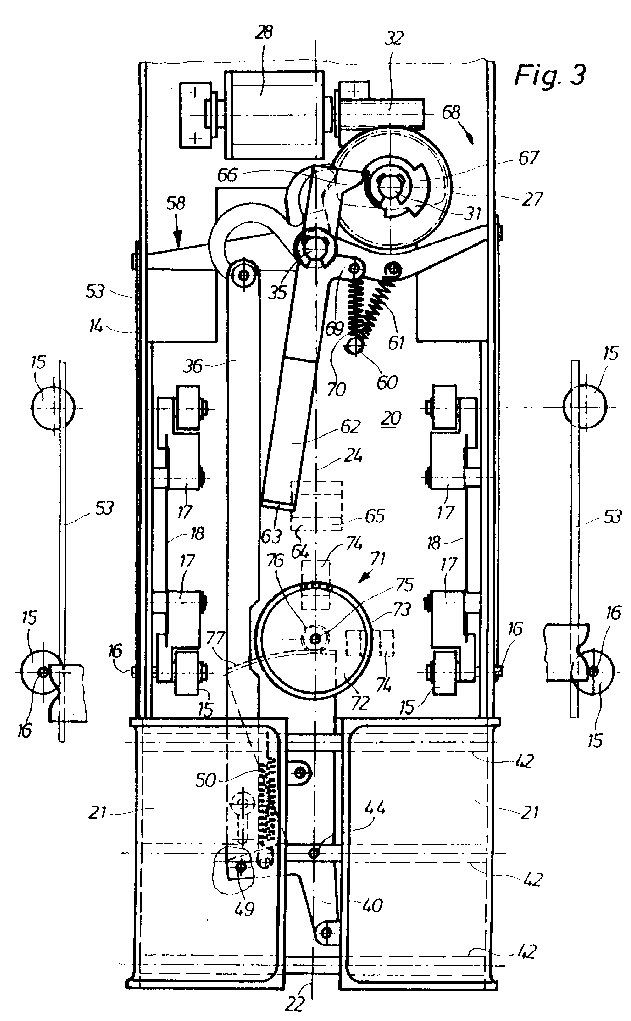

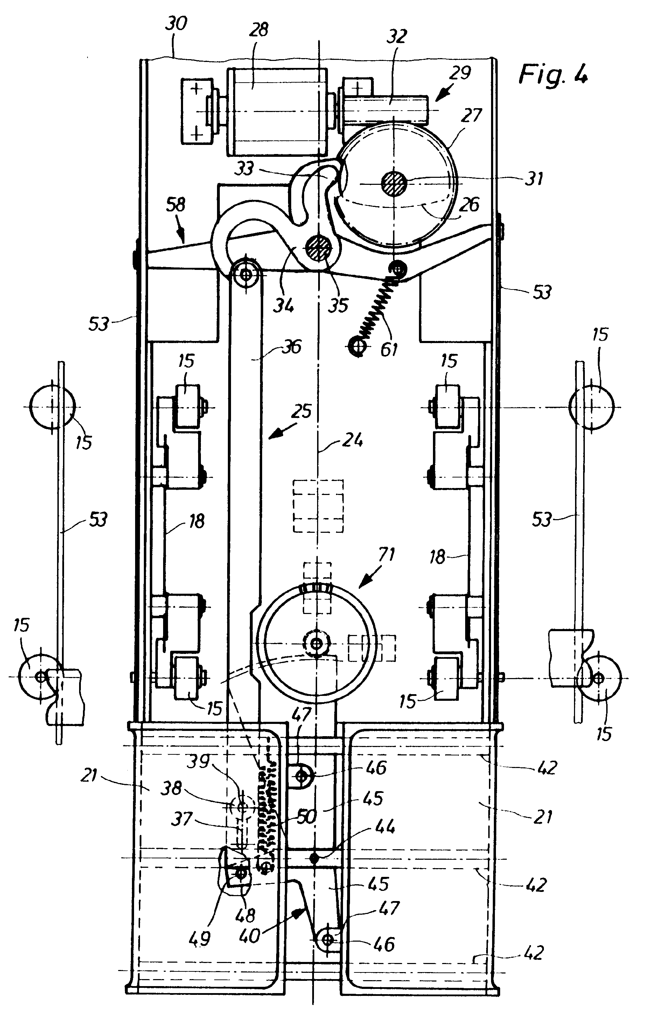

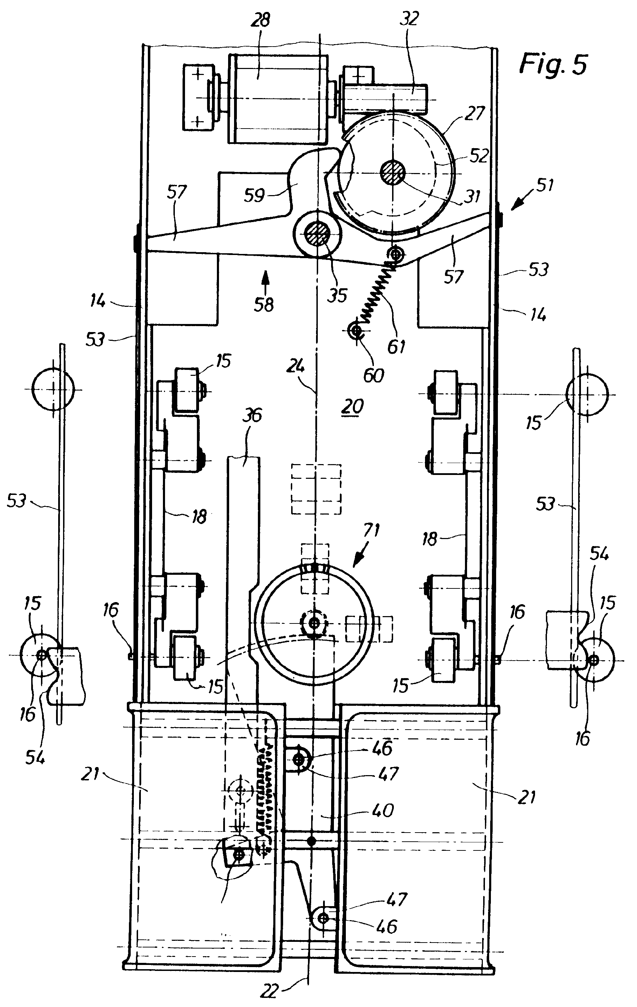

Zur Steuerung des Bewegungsablaufes der Kanalhälften 21 dient ein mit ihnen verbundenes, federbelastetes Hebel-Gestänge 25, das durch eine Steuerscheibe 26, die drehfest mit dem Schneckenrad 27 eines mit einem Antriebsmotor 28 gekoppelten Schneckengetriebes 29 verbunden ist, betätigbar ist. Die Steuerscheibe 26 und das Schneckenrad 27 sind auf einer gemeinsamen, an der Oberwand 30 des Prüfgerätes 1 gehaltenen Achse 31 drehbeweglich gelagert, wobei der Antriebsmotor 28, dessen Welle die mit dem Schneckenrad 27 kämmende Schnecke 32 trägt, ebenfalls an der Oberwand 30 befestigt ist. An der Steuerscheibe 26 liegt das freie, als Nocken 33 ausgebildete Ende eines zweiseitigen Hebels 34 an. Dieser Hebel 34 ist auf einem in der Mittenlängsachse 24 des Prüfkanals 20 liegenden und an der Oberwand 30 befestigten Lagerzapfen 35 drehbeweglich gehaltert. Eine an dem Hebel 34 angelenkte Stellstange 36 erstreckt sich bis zu den Kanalhälften 21 und ist oberhalb der Kanalhälften 21 durch eine in ein Langloch 37 eingreifende Zapfenführung 38, deren Zapfen 39 an der Oberwand 30 befestigt ist, gehaltert. Das freie Ende der Stellstange 36 arbeitet mit einem mit den Kanalhälften 21 gekoppelten, dreiarmigen Winkelhebel 40 zusammen. Auf ihrer Oberseite weisen die Kanalhälften 21 angeformte Lager 41 auf, mittels denen die Kanalhälften 21 auf drei in gleichem Abstand zueinanderliegenden Querachsen 42 gleitbeweglich geführt sind. An der Oberwand 30 gegenüberliegend befestigte Tragwände 43 nehmen die Querachsen 42 auf. Die mittlere Querachse 42 weist mittig einen Zapfen 44 auf, auf dem der Winkelhebel 40 schwenkbeweglich gelagert ist. Die miteinander fluchtenden Hebelarme 45 des Winkelhebels 40 sind über Zapfen 46 mit diametral gegenüberliegenden, an den einander zugewandten Längsseiten der Kanalhälften 21 angeformten Lagerlaschen 47 verbunden. Von den miteinander fluchtenden Hebelarmen 45 des Winkelhebels 40 zweigt rechtwinklig ein Hebelarm 48 ab, der endseitig einen Stift 49 trägt. Dieser Stift 49 liegt aufgrund der Wirkung einer mit dem Hebelarm 48 und der hinteren Querachse 42 verbundenen Zugfeder 50 an dem freien Ende der Stellstange 36 an. Die Steuerscheibe 26 ist also so ausgeführt, daß bei einer Einführung einer Banknote 3 in den Eingabekanal die Kanalhälften 21 die in den Fig. 3 bis 5 dargestellte verriegelte maximale Kanalbreiten-Einstellung einnehmen. Die Verriegelung der Kanalhälften 21 wird dann durch die Ansteuerung des Antriebsmotors 28 über den Durchlauferkenner 19 aufgehoben.

Zur sicheren Erfassung der Banknote 3 im Eingangsbereich des Prüfkanals 20 können die vorderen, federbelasteten Andrückrollen 15 zwangsgesteuert von den Zahnriemen 8 abgehoben und anschließend wieder abgesenkt werden. Zu diesem Zweck stehen die Achsen 16 der vorderen Andrückrollen 15 über eine federbelastete Hebel-Anordnung 51 mit einer Nockenscheibe 52 in Wirkverbindung, die drehfest an der Steuerscheibe 26 befestigt und auf der gemeinsamen Achse 31 gelagert ist. Die Achsen 16 der vorderen Andrückrollen erstrecken sich durch entsprechende Einschnitte in den Seitenwänden 14 nach außen und stützen sich hier jeweils an einer in einem Flachhebel 53 ausgebildeten Steuerkurve 54 ab. Die auf den Außenseiten der Seitenwände 14 längsverschieblich gehaltenen Flachhebel 53 besitzen an der der Steuerkurve 54 gegenüberliegenden Seite eine Einbuchtung 55, in die die diametralen, sich durch entsprechende Langlöcher 56 in den Seitenwänden 14 erstreckenden Arme 57 des dreiarmigen Schwenkhebels 58 eingreifen. Der Schwenkhebel 58 ist ebenfalls auf dem Lagerzapfen 35 gelagert und liegt mit seinem von den diametralen Armen 57 abgewinkelten Nockenarm 59 federbelastet an der Nockenscheibe 52 an. Zwischen einem an der Oberwand 30 befestigten Zapfen 60 und dem entsprechenden Arm 57 des Schwenkhebels 58 erstreckt sich eine Zugfeder 61. Die Nockenscheibe 52 ist so ausgelegt, daß bei verriegelter maximaler Eingabekanal-Breite die vorderen Andrückrollen 15 durch die Steuerkurven 54 der Flachhebel 53 von den Zahnriemen 8 abgehoben sind. Erst wenn die Längsmittenzentrierung der Banknote 3 durch die entriegelten Kanalhälften 21 abgeschlossen ist, werden die vorderen Andrückrollen 15 durch die von dem Antriebsmotor 28 beaufschlagte Nockenscheibe 52 und die zugehörige Hebel -Anordnung 51 freigegeben, wodurch sie aufgrund der Wirkung der Drahtfedern 18 die Banknote 3 gegen die Zahnriemen 8 drücken, und somit ein sicherer Transport der Banknote 3 gewährleistet ist.

Zur Überwachung des Bewegungsablaufes der Kanalhälften 21 und der vorderen Andrückrollen 15 dient ein auf dem Lagerzapfen 35 schwenkbeweglich gehalterter zweiarmiger Hebel 62, der einerseits über eine Abknickung 63 mit zwei nebeneinanderliegenden Gabelkopplern 64, 65 und andererseits über eine Nocke 66 mit einer Kurvenscheibe 67 zusammenwirkt. Die Kurvenscheibe 67 ist drehfest mit dem sich in Richtung des Pfeiles 68 drehenden Schneckenrad 27 verbunden. Von dem Hebel 62 geht eine Abwinklung 69 ab, die über eine Zugfeder 70 mit dem Zapfen 60 gekoppelt ist. In der verriegelten Stellung der Kanalhälften 21 des Eingabekanals 2 befindet sich die Abknickung 63 des Hebels 62 außerhalb der Gabelkoppler 64, 65. Sobald die Längsmittenausrichtung der Banknote 3 durch die entriegelten Kanalhälften 21 abgeschlossen ist, fällt der Hebel 62 in den Gabelkoppler 64 ein, der ein entsprechendes Informationssignal an die Schalteinrichtung weitergibt. Sobald die vorderen Andrückrollen 15 abgesenkt sind, fällt der Hebel 62 in den Gabelkoppler 65 ein, wodurch die Schalteinrichtung das Signal für das Ingangsetzen der Transporteinrichtung 7 erhält. Um die Rückgabe einer nichtzulässigen Banknote zu ermöglichen, nehmen die Kanalhälften wieder ihre verriegelte Position ein, wobei der Hebel 62 wieder in den Gabelkoppler 64 einfällt und da ein entsprechendes Signal an die Schalteinrichtung abgibt. Anschließend werden die vorderen Andrückrollen wieder abgehoben, was durch das Austreten des Hebels 62 aus dem Gabelkoppler 64 der Schalteinrichtung gemeldet wird.

Die Erkennung der Banknoten-Breite erfolgt über eine Meßeinrichtung 71, die mit der synchronen Verstellung der Kanalhälften 21 des Eingabekanals 2 gekoppelt ist. Entsprechend der festgestellten Breite der eingegebenen Banknote setzt die Meßeinrichtung ein zugehöriges Prüfprogramm der Abtasteinrichtungen in Gang, d.h. die von der Meßeinrichtung erkannte Banknoten-Breite bestimmt das für diese Banknote zuständige Prüfprogramm. Zur Meßeinrichtung 71 gehört eine Lochkranz-Scheibe 72, deren Lochkranz 73 von der Scheibe abgewinkelt ist. Der Lochkranz 73 läuft in den Gabeln zweier unter 90° versetzt zueinander angeordneter, Positionierimpulse erzeugender Gabelkoppler 74, die darüber hinaus ein Erkennen der Drehrichtung der Lochkranz-Scheibe 72 ermöglichen. Mit der auf der Achse 75 gelagerten Lochkranz-Scheibe 72 ist konzentrisch drehfest ein Zahnrad 76 verbunden, das mit einem Zahnkranzsegment 77 kämmt. Dieses Zahnkranzsegment 77 ist Bestandteil des Winkelhebels 40 für die Verstellung der Kanalhälften 21. Die Translationsbewegung der Kanalhälften 21 wird also in eine Rotationsbewegung der Lochkranz-Scheibe 72 umgesetzt, aus der sich der zurückgelegte Weg der Kanalhälften 21 ergibt.

## Patentansprüche

1. Prüfgerät für Banknoten oder dergleichen blattförmige Zahlungsmittel für selbstkassierende Automaten mit einem mit einer Transporteinrichtung (7) und mit Abtasteinrichtungen für das Erkennen und die Echtheitsprüfung der Banknote (3) versehenen Prüfkanal (20), dem ein Eingabekanal (2) mit verstellbarer Breite vorgelagert ist, dadurch gekennzeichnet, daß
- der Eingabekanal (2) aus zwei in seiner Mittenlängsachse (22) getrennten Kanalhälften (21), die synchron parallel gegen Federkraft verstellbar sind, besteht,
- die Kanalhälften (21) in ihrer Anlageposition die minimale und in ihrer getrennten Endposition die maximale Kanalbreite bestimmen,
- die Einführung einer jeden Banknote (3) in den Eingabekanal (2) bei verriegelter maximaler Kanalbreite bis zu einem im Anfangsbereich des Prüfkanals (20) angeordneten Durchlauferkenner (19) erfolgt, und
- der Durchlauferkenner (19) eine Aufhebung der Verriegelung der Kanalhälften (21) bewirkt, wodurch sich die Seitenwände (23) der Kanalhälften (21) aufgrund der Federkraft an die Banknote (3) anlegen und diese mittenzentrisch zu dem Prüfkanal (20) ausrichten.

2. Prüfgerät nach Anspruch 1, dadurch gekennzeichnet, daß mit der synchronen Verstellung der Kanalhälften (21) eine Meßeinrichtung (71) für die Erfassung der Banknoten-Breite gekoppelt ist, über die ein entsprechendes, von der Banknoten-Breite abhängiges Banknoten-Prüfprogramm der Abtasteinrichtungen aktivier-bar ist.

3. Prüfgerät nach Anspruch 1 oder 2, dadurch gekennzeichnet, daß die Kanalhälften (21) des Eingabekanals (2) mit einem federbeaufschlagten Hebel-Gestänge (25) in Wirkverbindung stehen, das über eine mittels eines Schnekkengetriebes (29) mit einem Antriebsmotor (28) gekoppelte Steuerscheibe (26) für die funktionsgerechte Verstellung der Kanalhälften (21) beaufschlagbar ist.

4. Prüfgerat nach einem oder mehreren der Ansprüche 1 bis 3, dadurch gekennzeichnet, daß die im Querschnitt U-förmig ausgebildeten Kanalhälften (21) über auf ihrer Oberseite angeformte Lager (41) auf drei im gleichen Abstand zueinanderliegenden Querachsen (42), die in gegenüberliegenden Tragwänden (43) gehaltert sind, gleitbeweglich geführt sind.

5. Prüfgerät nach einem oder mehreren der Ansprüche 1 bis 4, dadurch gekennzeichnet, daß die mittlere Querachse (42) mittig einen Lagerzapfen (44) für die Aufnahme eines dreiarmigen Winkelhebels (40) des Hebel-Gestänges (25) trägt, dessen fluchtende Hebelarme (45) an den gegenüberliegenden Längsseiten der Kanalhälften (21) angelenkt sind und dessen rechtwinklig abgewinkelter Hebelarm (48) endseitig einen Stift (49) aufnimmt, der aufgrund der Wirkung einer mit diesem Hebelarm (48) und der hinteren Querachse (42) verbundenen Zugfeder (50) kraftschlüssig an dem freien Ende einer Stellstange (36) des Hebel-Gestänges (25) anliegt.

6. Prüfgerät nach einem oder mehreren der Ansprüche 1 bis 5, dadurch gekennzeichnet, daß die Stellstange (36) in ihrem freien Endbereich in einer in ein Langloch (37) eingreifenden Zapfenführung (38) gehaltert und an ihrem anderen Ende an einem zweiseitigen Hebel (34) angelenkt ist, der um einen in der Mittenlängsachse (24) des Prüfkanals (20) liegenden Lagerzapfen (35) verschwenkbar ist und mit seinem als Nocken (33) ausgebildeten freien Ende an der Steuerscheibe (26) anliegt.

7. Prüfgerät nach einem oder mehreren der Ansprüche 1 bis 6, dadurch gekennzeichnet, daß die Steuerscheibe (26) und das Schneckenrad (27) des Schneckengetriebes (29) drehfest miteinander verbunden und auf einer gemeinsamen Achse (31) drehbeweglich gelagert sind.

8. Prüfgerät nach einem oder mehreren der Ansprüche 1 bis 7, dadurch gekennzeichnet, daß die Transporteinrichtung (7) für die Banknote (3) einen drehrichtungsumschaltbaren Antriebsmotor für zwei im bestimmten Abstand zueinander parallel verlaufende, endlose Zahnriemen (8) aufweist, die auf jeweils paarweise innerhalb der Bahnbreite der Banknote (3) im Bereich des Prüfkanals (20) angeordnete Rollen (9, 10) aufgelegt sind, denen jeweils in der Bewegungsbahn der Banknote (3) eine federbelastete Andrückrolle (15) oder Kufe gegenüberliegt, wobei die beiden vorderen dem Eingabekanal (2) unmittelbar zugewandten Andrückrollen (15) oder Kufen von den Zahnriemen (8) zwangsgesteuert entgegen der Federkraft abhebbar sind.

9. Prüfgerät nach einem oder mehreren der Ansprüche 1 bis 8, dadurch gekennzeichnet, daß die Achsen (16) der vorderen Andrückrollen (15) bzw. seitlich an den Kufen angeformte Stifte zur funktionsgerechten Steuerung ihrer Höhenverstellung über eine federbelastete Hebel-Anordnung (51) mit einer Nockenscheibe (52) in Wirkverbindung stehen, die drehfest an der die Kanalhälften (21) beaufschlagenden Steuerscheibe (26) befestigt und auf der Achse (31) des Schneckenrades (27) des Schneckengetriebes (29) drehbeweglich gelagert ist.

10. Prüfgerät nach einem oder mehreren der Ansprüche 1 bis 9, dadurch gekennzeichnet, daß die Hebel-Anordnung (51) zwei auf den gegenüberliegenden Seitenwänden (14) des Prüfgerätes (1) längsverschiebliche Flachhebel (53) umfaßt, die jeweils mit einer der Achse (16) der entsprechenden vorderen Andrückrolle (15) bzw. mit einem der Stifte der vorderen Kufen zugeordneten Steuerkurve (54) versehen sind und die an dem der Steuerkurve (54) gegenüberliegenden Ende jeweils eine Einbuchtung (55) aufweisen, in die die diametralen Arme (57) eines dreiarmigen, durch die Nockenscheibe (52) beaufschlagten Schwenkhebels (58) eingreifen.

11. Prüfgerät nach einem oder mehreren der Ansprüche 1 bis 10, dadurch gekennzeichnet, daß der dreiarmige Schwenkhebel (58) auf dem in der Mittenlängsache (24) des Prüfkanals (20) liegenden Lagerzapfen (35) gelagert ist und mit seinem von den diametralen Armen (57) abgewinkelten Nockenarm (59) aufgrund der Wirkung einer an dem entsprechenden Arm (57) angreifenden Zugfeder (61) an der Nockenscheibe (52) anliegt.

12. Prüfgerät nach einem oder mehreren der Ansprüche 1 bis 11, dadurch gekennzeichnet, daß auf dem den dreiarmigen Schwenkhebel (58) der Hebel-Anordnung (51) sowie den zweiseitigen Hebel (34) des Hebel-Gestänges (25) aufnehmenden Lagerzapfen (35) ein federbelasteter zweiarmiger Hebel (62) gelagert ist, der einerseits mit einer mit dem Antriebsmotor (28) gekoppelten Kurvenscheibe (67) und andererseits mit den Gabeln zweier Positionierimpulse erzeugender Gabelkoppler (64, 65) zusammenwirkt.

13. Prüfgerät nach einem oder mehreren der Ansprüche 1 bis 12, dadurch gekennzeichnet, daß das der Kurvenscheibe (67) zugewandte Ende des zweiarmigen Hebels (62) als Nocke (66) ausgebildet ist, die aufgrund der Wirkung einer sich zwischen einer Abwinklung (69) des zweiarmigen Hebels (62) und einem an der Oberwand (30) des Prüfgerätes (1) angeordneten Zapfen (60) erstreckenden Zugfeder(70) an der Kurvenscheibe (67) anliegt, wobei die Kurvenscheibe (67) drehfest an dem Schneckenrad (27) des Schneckengetriebes (29) befestigt und ebenfalls auf der Achse (31) des Schneckenrades (27) drehbeweglich gelagert ist.

14. Prüfgerät nach einem oder mehreren der Ansprüche 1 bis 13, dadurch gekennzeichnet, daß die Meßeinrichtung (71) für die Erfassung der Banknoten-Breite eine Lochkranz-Scheibe (72) umfaßt, deren von der Scheibe abgewinkelter Lochkranz (73) in den Gabeln zweier unter 90° versetzt zueinander angeordneter, Positionierimpulse erzeugender Gabelkoppler (74) läuft, wobei die Lochkranz-Scheibe (72) ein Zahnrad (76) trägt, das mit einem mit dem Winkelhebel (40) für die Verstellung der Kanalhälften (21) verbundenen Zahnkranzsegment (77) kämmt.

## Claims

1. A testing apparatus for bank notes or like instruments of payment in sheet form for automatic cash processing machines, comprising a testing channel (20) which is provided with a transport device (7) and scanning devices for recognizing and testing the genuineness of the bank-note (3), and an entry channel (2) of adjustable width located before the testing channel, characterized in that
- the entry channel (2) consists of two channel halves (21), which are separated from each other along the central longitudinal axis (22) of the entry channel and adjustable in synchronism and in parallel fashion against spring bias,
- the channel halves (21) define in their contact position the minimum channel width and in their end position of separation the maximum channel width,
- the introduction of each individual bank note (3) into the entry channel (2) is achieved with the latter latched at its maximum channel width until this bank note reaches a transit sensor (19) arranged at the beginning region of the testing channel (20), and
- the transit sensor (19) suspends the latching of the channel halves, whereby due to the spring bias, the side walls (23) of the channel halves (21) come into contact with the bank note (3) and align it centrally into the testing channel (20).

2. Testing apparatus according to Claim 1 characterized in that, with the synchronous adjustment of the channel halves (21), a measuring device (71) for determining the width of the bank note is engaged. over which device a corresponding bank note testing programme of scanning devices can be set into action, which programme is dependent on the width of the bank notes.

3. Testing apparatus according to Claim 1 or 2 characterized in that the channel halves (21) of the entry channel (2) are operatively connected with a spring actuated lever rod (25), which can be actuated through a control disc (26) coupled by means of a worm drive (29) with a drive motor (28) for the functionally correct positional adjustment of the channel halves (21).

4. Testing apparatus according to any one or more of Claims 1 to 3 characterized in that the channel halves have a U-shape in cross-section and are guided slidingly on three equi-spaced transverse axles (42) by means of bearings (41) formed on the upper sides of the channel halves, and the transverse axles (42) are mounted in oppositely located support walls (43).

5. Testing apparatus according to any one or more of Claims 1 to 4 characterized in that the middle one of the transverse axles (42) centrally carries a bearing pin (44) for receiving a three-armed angled lever (40) of the lever rod (25), and aligned lever arms (45) of the angled lever (40) are connected to the longitudinal sides of the channel halves (21) which face each other and a perpendicularly inclined lever arm (48) of the angled lever at its end receives a rod (49), which, due to the effect of a tension spring (50) connected with the lever arm (48) and the rearmost transverse axle (42), contacts in forced cooperation on the free end of a positioning rod (36) of the lever rod (25).

6. Testing apparatus according to any one or more of Claims 1 to 5 characterized in that the positioning rod (36) is supported towards its free end in a peg guide (38) which engages in an slot (37) and is connected at its other end to a two-sided lever (34) which can pivot about a bearing pin (35) located on the central longitudinal axle of the testing path (20), the two-sided lever (34) having its free end formed as a cam applied on the control disc.

7. Testing apparatus according to any one or more of Claims 1 to 6 characterized in that the control disc (26) and the worm wheel (27) of the worm drive (29) are connected to rotate fixedly with each other, and are supported rotatably on a common axle (31).

8. Testing apparatus according to any one or more of Claims 1 to 7 characterized in that the transport device (7) for the bank notes comprises a drive motor which can be reversed in rotational direction for two endless toothed belts (8) running in parallel at a given distance apart, which engage on respective ones of pulleys (9,10) arranged in pairs within the path width of the bank note (3) in the region of the test channel (20), against which pulleys respective spring-loaded pressure rollers (15) or runners are applied, and both of the forward pressure rollers (15) or forward runners directly toward the entry path (2) can be lifted away from the toothed belts (8) against spring bias.

9. Testing apparatus according to any one or more of Claims 1 to 8 characterized in that the axles (16) of the forward pressure rollers (15), or as appropriate, lateral rods on the runners, provide for their suitable control of their lifting off by use of a spring-loaded lever arrangement (51) functionally coupled with a cam disc (52) which is mounted rotationally fixed with the control disc (26) driving the channel halves (21), and which is mounted rotatably with respect to the axle (31) of the worm wheel of the worm drive (29).

10. Testing apparatus according to any one or more of Claims 1 to 9 characterized in that the lever arrangement (51) comprises two flat levers (53) which can slide longitudinally on the the opposite side walls (14) of the test apparatus (1), which flat levers (53) are provided with control contours (54) associated with respective axles (16) of the forward pressure roller (15) or, as appropriate, with respective rods of the forward runners, and the flat levers (53) are provided at their ends opposite to their control contours (54) with respective indentations (55), in which there are engaged diametral arms (57) of a three-armed pivoted lever (58) which is acted upon by the cam disc (52).

11. Test apparatus according to any one or more of Claims 1 to 10, characterized in that the three-armed pivoted lever (58) is supported on the bearing pin (35) which is located on the central longitudinal axis of the testing path (20), and the pivoted three-armed lever (58) bears on the cam disc (52) by virtue of its cam arm (59) which is located at an angle to the diametral opposite arms (57) and by virtue of a tension spring (61) which acts on the appropriate one of the diametral arms (57).

12. Test apparatus according to any one or more of Claims 1 to 11 characterized in that on the bearing pin (35), which receives the three-armed pivoted lever (58) of the lever arrangement (51) and which receives the two-sided lever (34) of the lever rod (25), a spring-loaded two-armed lever (62) is supported, which cooperates on one side with a shaped disc (67) coupled to the drive motor (28) and on the other side with the forks of two fork couplers (64,65) producing positioning pulses.

13. Test apparatus according to any one or more of Claims 1 to 12 characterized in that the end of the two-armed lever (62) adjacent the shaped disc (67) is formed as a cam (66), which is applied on the shaped disc (67) due to the action of a tension spring (70) extending between an angled off portion (69) of the two armed lever (62) and a pin (60) arranged on the upper wall (30) of the testing apparatus (1), also the shaped disc (67) is fixed non-rotatably to the worm wheel (27) of the worm drive (29) and likewise is mounted on the axle (31) of the worm wheel (27).

14. Testing apparatus according to any one or more of Claims 1 to 13 characterized in that the measuring device (71) for the determination of the width of the bank note comprises a disc (72) having a perforated rim (73) which is inclined away from the disc and passes between the forks of two fork couplers (74) arranged perpendicularly to each other and producing positioning pulses, wherein the disc (72) having a perforated rim carries a gear wheel (76), which meshes with a segment (77) having a toothed edge, this segment being connected with an angled lever (40) for the positional adjustment of the channel halves (21).

## Revendications

1. Appareil de contrôle pour billets de banque ou moyens de paiement similaires sous forme de feuilles pour appareils d'encaissement automatiques, avec un canal de contrôle (20) muni d'un dispositif de transport (7) et de dispositifs de palpation pour la reconnaissance et le contrôle d'authenticité du billet de banque (3), en amont duquel est placé un canal d'entrée (2) avec largeur réglable, caractérisé en ce que
- le canal d'entrée (2) est constitué de deux moitiés de canal (21) séparées par son axe longitudinal central (22), qui sont réglables parallèlement de façon synchrone à l'encontre d'une force de ressort,
- les moitiés de canal (21) déterminent la largeur de canal minimale à leur position d'appui et maximale à leur position extrême séparée,
- l'introduction de chaque billet de banque (3) dans le canal d'entrée (2), la largeur de canal maximale étant bloquée, s'effectue jusqu'à un témoin de passage (19) disposé dans la zone de début du canal de contrôle (20), et
- le témoin de passage (19) accomplit une suppression du blocage des moitiés de canal (21), les parois latérales (23) des moitiés de canal (21) s'appliquant en raison de la force de ressort sur le billet de banque (3) et le dirigeant de façon centrée vers le canal de contrôle (20).

2. Appareil de contrôle selon la revendication 1, caractérisé en ce qu'au réglage synchrone des moitiés de canal (21) est couplé un dispositif de mesure (71) pour la saisie de la largeur du billet de banque, par l'intermédiaire duquel un programme de contrôle de billet de banque correspondant des dispositifs de palpation, dépendant de la largeur du billet de banque, peut être activé.

3. Appareil de contrôle selon la revendication 1 ou 2, caractérisé en ce que les moitiés de canal (21) du canal d'entrée (2) coopèrent avec une tige de levier (25) à rappel élastique qui peut être sollicitée par l'intermédiaire d'un disque de commande (26) couplé à un moteur d'entraînement (28) au moyen d'un engrenage à vis sans fin (29) pour le réglage fonctionnel des moitiés de canal (21).

4. Appareil de contrôle selon l'une ou plusieurs des revendications 1 à 3, caractérisé en ce que les moitiés de canal (21) conçues avec une section en forme de U sont guidées à coulissement par l'intermédiaire de paliers (41) formés sur leur côté supérieur sur trois axes transversaux (42) placés à égale distance les uns des autres, qui sont maintenus dans des parois porteuses opposées (43).

5. Appareil de contrôle selon l'une ou plusieurs des revendications 1 à 4, caractérisé en ce que l'axe transversal central (42) porte centralement un tourillon d'appui (44) pour la réception d'un levier coudé à trois bras (40) de la tige de levier (25), dont les bras de levier en alignement (45) sont articulés aux côtés longitudinaux opposés des moitiés de canal (21) et dont le bras de levier coudé à angle droit (48) reçoit à l'extrémité une broche (49) qui en raison de l'effet d'un ressort de traction (50) relié à ce bras de levier (48) et à l'axe transversal arrière (42) repose sous la force sur l'extrémité libre d'une tige de réglage (36) de la tige de levier (25).

6. Appareil de contrôle selon l'une ou plusieurs des revendications 1 à 5, caractérisé en ce que la tige de réglage (36) est maintenue dans sa zone d'extrémité libre dans un guidage de tourillon (38) s'engageant dans un trou oblong (37) et est articulée à son autre extrémité à un levier à deux côtés (34) qui est pivotant autour d'un tourillon d'appui (35) placé dans l'axe longitudinal central (24) du canal de contrôle (20) et repose sur le disque de commande (26) avec son extrémité libre formée comme une came (33).

7. Appareil de contrôle selon l'une ou plusieurs des revendications 1 à 6, caractérisé en ce que le disque de commande (26) et la roue (27) de l'engrenage à vis sans fin (29) sont reliés stationnaires en rotation les uns aux autres et montés à rotation sur un axe commun (31).

8. Appareil de contrôle selon l'une ou plusieurs des revendications 1 à 7, caractérisé en ce que le dispositif de transport (7) pour le billet de banque (3) présente un moteur de commande à inversion de sens de rotation pour deux courroies crantées sans fin (8) disposées parallèles à une distance déterminée l'une l'autre qui sont placées sur des rouleaux (9, 10) disposés respectivement par paires à l'intérieur de la largeur de trajectoire du billet de banque (3) dans la zone du canal de contrôle (20), à chacun desquels est opposé dans la trajectoire de déplacement du billet de banque (3) un rouleau de pression (15) à rappel élastique ou bascule, les deux rouleaux de pression (15) ou bascules avant orientés directement vers le canal d'entrée (2) pouvant être soulevés sous commande forcée à l'encontre de la force de ressort par les courroies crantées (8).

9. Appareil de contrôle selon l'une ou plusieurs des revendications 1 à 8, caractérisé en ce que les axes (16) des rouleaux de pression avant (15) respectivement des broches formées latéralement sur les bascules pour commander fonctionnellement leur réglage en hauteur coopèrent par l'intermédiaire d'un dispositif de levier à rappel élastique (51) avec un disque à came (52) qui est fixée stationnaire en rotation au disque de commande (26) sollicitant les moitiés de canal (21) et est monté à rotation sur l'axe (31) de la roue (27) de l'engrenage à vis sans fin (29).

10. Appareil de contrôle selon l'une ou plusieurs des revendications 1 à 9, caractérisé en ce que le dispositif de levier (51) comprend deux leviers plats (53) décalables longitudinalement sur les parois latérales (14) opposées de l'appareil de contrôle (1), qui sont munis chacun d'une came de commande (54) associée à l'un des axes (16) du rouleau de pression avant correspondant (15), respectivement à l'une des broches des bascules avant et qui présentent chacun sur l'extrémité opposée à la came de commande (54) un évidement (55) dans lequel s'engrènent les bras diamétraux (57) d'un levier pivotant à trois bras (58) sollicité par le disque à came (52).

11. Appareil de contrôle selon l'une ou plusieurs des revendications 1 à 10, caractérisé en ce que le levier pivotant à trois bras (58) est monté sur le tourillon d'appui (35) placé dans l'axe longitudinal central (24) du canal de contrôle (20) et s'applique par son bras à ergot (59) coudé à partir des bras diamétraux (57) sur le disque à came (52) sous l'effet d'un ressort de traction (61) attaché au bras correspondant (57).

12. Appareil de contrôle selon l'une ou plusieurs des revendications 1 à 11, caractérisé en ce que sur le tourillon d'appui (35) recevant le levier pivotant (58) du dispositif de levier (51) ainsi que le levier à deux côtés (34) de la tige de levier (25) est monté un levier à deux bras à rappel élastique (62) qui coopère d'une part avec un disque à came (67) couplé au moteur de commande (28) et d'autre part avec les fourches de deux coupleurs à fourche (64, 65) produisant des impulsions de positionnement.

13. Appareil de contrôle selon l'une ou plusieurs des revendications 1 à 12, caractérisé en ce que l'extrémité du levier à deux bras (62) orientée vers le disque à came (67) est conçue comme un ergot (66) qui s'applique sur le disque à came (67) sous l'effet d'un ressort de traction (70) s'étendant entre un coude U (69) du levier à deux bras (62) et un têton (60) disposé sur la paroi supérieure (30) de l'appareil de contrôle (1), le disque à came (67) étant fixé stationnaire en rotation à la roue (27) de l'engrenage à vis sans fin (29) et étant monté également à rotation sur l'axe (31) de la roue (27).

14. Appareil de contrôle selon l'une ou plusieurs des revendications 1 à 13, caractérisé en ce que le dispositif de mesure (71) pour la saisie de la largeur du billet de banque comprend un disque à couronne perforée (72) dont la couronne perforée (73) coudée à partir du disque tourne dans les fourches de deux coupleurs à fourche (74) disposés décalés de 90° l'un par rapport à l'autre, produisant des impulsions de positionnement, le disque à couronne perforée (72) portant une roue dentée (76) qui s'engrène avec un segment de couronne dentée (77) relié au levier coudé (40) pour le réglage des moitiés de canal (21).
